# EUROPEAN PATENT APPLICATION

(11) **EP 1 429 202 A2**
(43) Date of publication of application: **16.06.2004**
(21) Application number: 03024447.9
(22) Date of filing: 23.10.2003
(51) Int. Cl.: G03G 15/02, B29C 47/02, F16C 13/00

(54) **Method of producing an electrically conductive crown-shaped roll for use in an electrophotographic apparatus**

(30) Priority: 24.10.2002 JP 2002310049
(71) Applicant: Tokai Rubber Industries, Ltd., Komaki-shi, Aichi-ken, 485-8550 (JP)
(72) Inventor: Miyamori, Shiro, Tokai Rubber Industries, Ltd., Komaki-shi Aichi-ken, 485-8550 (JP); Hayasaki, Yasuyuki, Tokai Rubber Industries, Ltd., Komaki-shi Aichi-ken, 485-8550 (JP); Umeda, Masanari, Tokai Rubber Industries, Ltd., Komaki-shi Aichi-ken, 485-8550 (JP)
(74) Representative: Frankland, Nigel Howard

(57) **Abstract**

A method of producing an electrically conductive roll having a proper crown shape at lower costs through a smaller number of process steps and without polishing. In this production method, a crown-shaped rubber layer is formed unitarily on a metal core (9) by variably controlling the amount of a rubber material (A) adhering on the metal core along the length of the metal core during extrusion of the rubber material.

## Description

### BACKGROUND OF THE INVENTION

### Field of the Invention

The present invention relates to a method of producing an electrically conductive crown-shaped roll for use in an electrophotographic apparatus such as a copying machine, a printer or a facsimile machine, and to an electrically conductive roll produced by this production method.

### Description of the Art

Exemplary electrically conductive rolls for use in an electrophotographic apparatus such as a copying machine include a developing roll, a charging roll, a transfer roll and the like. Such an electrically conductive roll typically includes a metal core (shaft) and a coating layer (elastic layer) provided on the outer periphery of the metal core.

The electrically conductive roll generally has a crown shape, that is, the coating layer has a thickness progressively increasing from axially opposite ends thereof toward a middle portion thereof so as to provide even contact with a mating object. Exemplary methods for the formation of the crown-shaped coating layer include: (a) a method in which a material is injected into a crown-shaped mold (having a cavity conformal to the crown shape of the roll) with a metal core set therein and the resulting product is unmolded; (b) a method in which a material is vulcanized in a split mold and the resulting product is polished into a crown shape; and (c) a method in which a roll is surface-coated while the roll is longitudinally (axially) moved at a varying movement speed.

However, these methods have the following drawbacks. The method (a) employing the crown-shaped mold is costly, because a dedicated crown-shaped mold conformal to the crown shape of the electrically conductive roll has to be prepared. In the case of the method (b) involving polishing, the resulting roll has the proper crown shape, but has poorer surface properties. That is, since the roll surface has been roughened by the polishing, a toner and foreign matter are liable to adhere to the roll surface. Therefore, the roll fails to provide uniform copying properties, which, when in use, result in a reduced image density and streaks in an image. In addition, the polishing step is an extra step and moreover requires high skill, and correspondingly increases the costs. In the case of the method (c) involving the surface coating, it is impossible to provide an electrically conductive roll having a greater crown shape, so that the roll fails to provide even contact with a mating object. That is, a space is formed between the electrically conductive roll and the object, making it impossible to provide uniform copying properties. Further, if the space is filled with a toner and foreign matter, the roll fails to provide uniform copying properties.

For example, Japanese Unexamined Patent Publication No. 6-58325 (paragraphs 0010 to 0018) proposes an electrically conductive roll production method which employs an extrusion process for the formation of the crown shape for a roll. In this method, an electrically conductive roll is produced, which includes a shaft, an electrically conductive base layer provided on the outer periphery of the shaft, and an electrically conductive thin layer provided on the base layer. In the production, the base layer is first formed in a thick wall tubular shape by a forming machine, and then a thermoplastic resin is extruded on the base layer. During the extrusion, the feed rate or drawing rate of the electrically conductive roll is changed so that the electrically conductive thin layer has a smaller thickness at opposite ends of the roll and a greater thickness at a middle portion of the roll. Then, the resulting product is cut to a predetermined length by a cutter, and a shaft is inserted into the center of the tubular base layer.

However, this production method requires a greater number of process steps including the formation of the base layer, the formation of the electrically conductive thin layer on the base layer, the cutting of the resulting product to the predetermined length, and the insertion of the shaft in the center of the tubular base layer, thereby increasing the costs.

In view of the foregoing, it is an object of the present invention to provide a method of producing an electrically conductive roll having a proper crown shape at lower costs through a smaller number of process steps and without polishing, and to provide an electrically conductive roll produced by this production method.

### SUMMARY OF THE INVENTION

In accordance with a first aspect of the present invention to achieve the aforesaid object, there is provided a method of producing an electrically conductive crown-shaped roll, wherein a crown-shaped rubber layer is formed unitarily on a metal core by variably controlling the amount of a rubber material adhering on the metal core along the length of the metal core during extrusion of the rubber material.

In accordance with a second aspect of the present invention, there is provided an electrically conductive roll produced by the electrically conductive crown-shaped roll production method described above.

The inventors of the present invention conducted a series of studies to produce an electrically conductive crown-shaped roll at lower costs through a smaller number of process steps by forming a rubber layer unitarily on a metal core by extrusion. As a result, the inventors found that the aforesaid object can be achieved by forming a crown-shaped rubber layer unitarily on a metal core by variably controlling the amount of a rubber material adhering on the metal core along the length of the metal core during the extrusion of the rubber material. Thus, the present invention has been attained. In the present invention, the electrically conductive crown-shaped roll can be produced by extrusion at lower costs through a smaller number of process steps and without polishing. In addition, the crown shape of the rubber layer can be controlled by variably controlling the amount of the rubber material adhering on the metal core along the length of the metal core during the extrusion. This method obviates the need for preparing. a dedicated crown-shaped mold conformal to the crown shape of the electrically conductive roll. Further, the crown-shaped rubber layer is formed unitarily on the metal core, so that the number of the process steps is reduced. The inventive electrically conductive roll is produced by the production method having the aforesaid advantageous effects. In the present invention, the term "crown shape" means a shape such that the rubber layer has a diameter progressively increasing from axially opposite ends thereof toward an axially middle portion thereof and may have a constant inner diameter in the axially middle portion thereof.

In the present invention, the metal core is passed through a round orifice of a die, while the rubber material is supplied into a space defined between the die and the metal core during the extrusion. In this case, the amount of the rubber material adhering on the metal core can be variably controlled along the length of the metal core by changing the passage speed of the metal core and/or the supply rate of the rubber material.

In the present invention, the rubber layer may be formed in the crown shape by changing the passage speed of the metal core through the die. In this case, a desired crown shape can be provided by controlling the passage speed of the metal core at desired levels.

In the present invention, the rubber layer may be formed in the crown shape by changing the supply rate of the rubber material. In this case, a desired crown shape can be provided by controlling the supply rate of the rubber material at desired levels.

In the present invention, the rubber material-may contain silica. In this case, the electrically conductive roll has a mirror-finished surface.

### BRIEF DESCRIPTION OF THE DRAWINGS

Fig. 1 is a diagram illustrating an extruder to be employed for a method of producing an electrically conductive crown-shaped roll according to one embodiment of the present invention;
Fig. 2 is a diagram illustrating a cross head for use in the extruder of Fig. 1; and
Fig . 3 is a diagram illustrating an electrically conductive crown-shaped roll.

### DESCRIPTION OF THE INVENTION

The present invention will hereinafter be described in detail.

In a production method for an electrically conductive crown-shaped roll according to the present invention, a crown-shaped rubber layer is formed unitarily on a metal core by variably controlling the amount of a rubber material adhering on the metal core along the length of the metal core during extrusion of the rubber material.

For the extrusion, an extruder is employed, which is adapted, for example, to supply the rubber material into a space defined between a die and the metal core while passing the metal core through a round orifice of the die. The round orifice of the die of the extruder may have a diameter of 3.5 to 65mm, preferably 5 to 25mm. When the round orifice of the die has a mirror-finished inner peripheral surface, the inner peripheral surface may have an axial length of 150 to 500mm, preferably 250 to 350mm. The inner peripheral surface may have a ten-point average roughness (Rz) of 0.1 to 6.0µm, preferably 0.1 to 3.0µm.

The metal core has a cylindrical shape, and may have an axial length of 150 to 500mm, preferably 250 to 350mm. The metal core preferably is thinner than an ordinary metal core, and may have a diameter of 3 to 60mm, preferably 5 to 20mm. The crown-shaped rubber layer formed on the metal core may have a thickness of 0.5 to 20mm, preferably C-7 to 10mm. The rubber layer may have a crown portion having a thickness of 0.001 to 1mm, preferably 0.01 to 0.2mm.

The amount of the rubber material adhering on the metal core is variably controlled along the length of the metal core by changing the passage speed of the metal core and/or by changing the supply rate of the rubber material. when the variable control of the amount adhered on the metal core is achieved by changing the passage speed of the metal core, the supply rate of the rubber material preferably is kept constant, and an extrusion pressure is set at, for example, 5 to 45MPa, preferably 20 to 30MPa. Further, an extrusion period may be 1 to 300 sec, preferably 10 to 30 sec, and an extrusion distance may be 150 to 500mm, preferably 250 to 347mm. When the variable control of the amount adhered on the metal core is achieved by changing the supply rate of the rubber material, the passage speed of the metal core preferably is kept constant, and the rotation speed of a screw of the extruder for the. extrusion of the rubber material may be set at 1 to 57rpm, preferably 5 to 30rpm. Alternatively, the amount of the rubber material adhering on the metal core may be controlled by employing these methods in combination.

Examples of the rubber material include a nitrile butadiene rubber, a hydrogenated nitrile rubber, an epichlorohydrin rubber, a chloroprene rubber, a styrene butadiene rubber, a butadiene rubber, an ethylene propylene rubber, an isoprene rubber, polynorbornene rubber, a fluorine containing rubber, a silicone rubber and a urethane rubber, which may be used in combination as a blend. As required, vulcanizing agents, vulcanization accelerators, electrically conductive agents, static charge controlling agents and the like may be added to the rubber material. Examples of the static charge controlling agents include a quaternary ammonium salt, a borate, an azine (Nigrosine) compound, an azo compound, a metal hydroxynaphthoate complex and surface active agents (anionic, cationic and nonionic surface active agents). Further, stabilizers, UV-absorbers, anti-static agents, reinforcing materials, lubricants, releasing agents, dyes, pigments, flame retarders and the like may be added to the rubber material as required.

when silica is added to the rubber material, the roll has a mirror-finished surface. Silica may be present in the rubber material in a proportion of 10 to 70 parts by weight, preferably 40 to 60 parts by weight, based on 100 parts by weight of the rubber material. The mirror-finished surface of the roll may have a ten-point average roughness (Rz) of 0.1 to 6.0µm, preferably 0.1 to 3.0µm. An ionic conductive agent may further be added to the rubber material.

The electrically conductive roll may have a single layer structure or a plural-layer structure. The electrically conductive roll is usable as a developing roll, a charging roll, a transfer roll or the like.

An embodiment of the present invention will be described in greater detail with reference to the attached drawings.

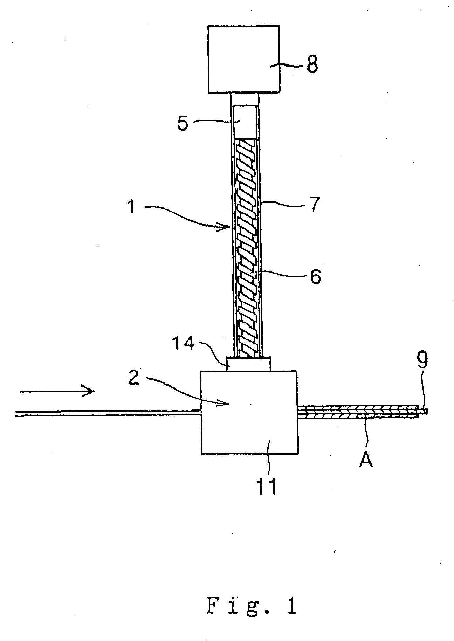

Fig. 1 illustrates an extruder which may be employed in a method of producing an electrically conductive crown-shaped roll according to one embodiment of the present invention. As shown, the extruder 1 includes a cross head 2, a hopper 5 in which a rubber material is loaded, a single screw 6, a cylinder 7 having heating means such as a heater (not shown), and a driver 8 having a motor (not shown) incorporated therein for driving the screw 6. The rubber material loaded into the hopper 5 is supplied into the cylinder 7, and softened in the cylinder 7 by the heating means. The softened rubber material is kneaded by rotation of the screw 6, and extruded into the cross head 2.

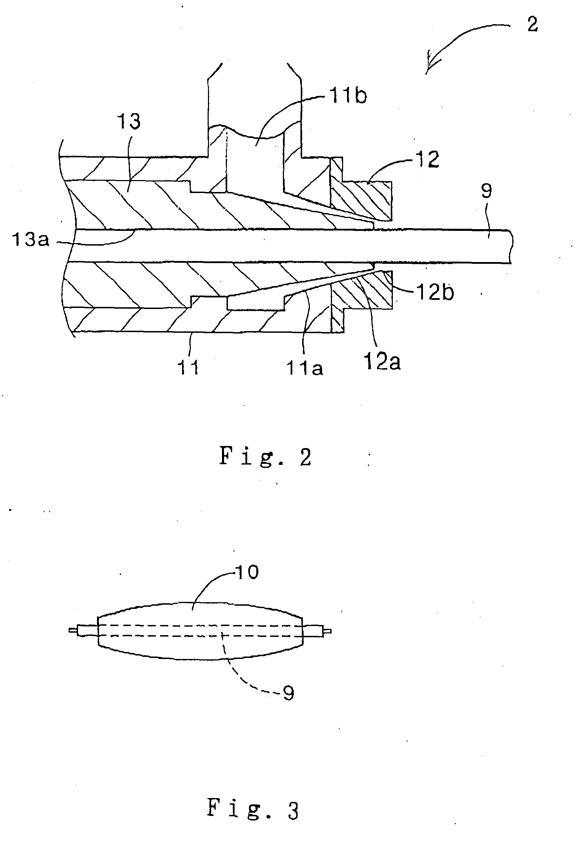

As shown in Fig. 2, the cross head 2 includes a main body 11 having a through-hole 11a of an inverted truncated cone shape extending laterally therethrough, a die 12 having a through-hole 12a of a generally inverted truncated cone shape extending coaxially with the through-hole 11a in association with the through-hole 11a, and a nipple 13. The through-hole 11a of the main body 11 is connected to a rubber material flow path 11b provided in the main body 11. With this arrangement, the rubber material extruded from the cylinder 7 of the extruder 1 by the screw 6 (not shown in Fig. 2) flows into the through-hole 11a via a connection pipe 14 and the rubber material flow path 11b. The through-hole 12a of the die 12 has a round orifice 12b provided at an end thereof.

The nipple 13 has a generally cylindrical shape, and has a center through-hole 13a extending laterally therethrough. A metal core 9 to be described later is inserted through the center through-hole 13a. The center through-hole 13a of the nipple 13 is positioned coaxially with the through-holes 11a, 12a and the round orifice 12b. with the metal core 9 inserted in the center through-hole 13a, a right end portion of the nipple 13 is located in the through-holes 11a, 12a, and a right open end of the center through-hole 13a of the nipple 13 is positioned in close proximity to the orifice 12b of the die 12.

with this arrangement, the rubber material extruded into the through-hole 11a of the main body 11 of the cross head 2 from the cylinder 7 of the extruder 1 flows through a space defined between the through-hole 11a of the main body 11 and the nipple 13 and a space defined between the through-hole 12a of the die 12 and the nipple 13 into the orifice 12b. On the other hand, the metal core 9 inserted into the center through-hole 13a of the nipple 13 is passed through the right open end of the center through-hole 13a toward the round orifice 12b and then through the orifice 12b, and taken out. At this time, the rubber material adheres on the outer periphery of the metal core 9, whereby a rubber material layer A (see Fig. 1) having a desired crown shape is formed on the metal core 9. Thereafter, the rubber material layer A is vulcanized, and cooled. Then, the resulting rubber layer 10 (see Fig. 3) is cut to a predetermined size. Thus, an electrically conductive roll (see Fig. 3) is produced, which includes a crown-shaped rubber layer 10 having a mirror-finished. outer peripheral surface.

In this manner, the crown-shaped rubber layer 10 is formed directly on the metal core 9 by extrusion. Therefore, the formation of the crown-shaped rubber layer 10 can be achieved at lower costs through a smaller number of process steps and without a polishing step.

By the electrically conductive crown-shaped roll production method according to the present invention, the electrically conductive roll having a proper crown shape can be produced by the extrusion at lower costs through a smaller number of process steps and without polishing. In addition, the crown shape of the rubber layer can be controlled by variably controlling the amount of the rubber material adhering on the metal core along the length of the metal core during extrusion. This method obviates the need for preparing a dedicated crown-shaped mold conformal to the crown shape of the electrically conductive roll. Further, the crown-shaped rubber layer is formed unitarily on the metal core, so that the number of the process steps is reduced as compared with the case where the base layer is first formed on the metal core and then the electrically conductive crown-shape thin layer is formed on the base layer. The electrically conductive roll according to the present invention is produced by the production method having the aforesaid advantageous effects.

In the present invention, the metal core is passed through the round orifice of the die, while the rubber material is supplied into the space defined between the die and the metal core during the extrusion. In this case, the amount of the rubber material adhering on the metal core can variably be controlled along the length of the metal core by changing the passage speed of the metal core and/or the supply rate of the rubber material.

In the present invention, the rubber layer may be formed in the crown shape by changing the passage speed of the metal core. In this case, a desired crown shape can be provided by controlling the passage speed of the metal core at desired levels.

In the present invention, the rubber layer may be formed in the crown shape by changing the supply rate of the rubber material. In this case, a desired crown shape can be provided by controlling the supply rate of the rubber material at desired levels.

In the present invention, the rubber material may contain silica. In this case, the electrically conductive roll has a mirror-finished surface.

The features disclosed in the foregoing description, in the claims and/or in the accompanying drawings may, both separately and in any combination thereof, be material for realising the invention in diverse forms thereof.

## Claims

1. A production method for an electrically conductive crown-shaped roll, comprising the steps of providing a metal core, and extruding a rubber material on the metal core. while variably controlling an amount of the rubber material adhering on the metal core along a length of the metal core so as to form a rubber layer having a crown shape unitarily on the metal core.

2. A production method as set forth in Claim 1 wherein extruding comprises passing the metal core through an orifice of a die while supplying the rubber material into a space defined between the die and the metal core.

3. A production method as set forth in Claim 2 wherein extruding comprises changing a passage speed of the metal core.

4. A production method as set form in Claim 2 or Claim 3 wherein extruding comprises changing a supply rate of the rubber material.

5. A production method as set forth in any one of Claims 1 to 4 wherein the rubber material contains silica.

6. A production method as set forth in Claim 5 wherein silica is present in the rubber material in a proportion of 10 to 70 parts by weight based on 100 parts by weight of the rubber material.

7. A production method as set forth in any one of the preceding Claims wherein the roll has a plural-layer structure.

8. A production method as set forth in any one of the preceding Claims wherein an ionic conductive agent is added to the rubber material.

9. A production method as set forth in any one of the preceding Claims wherein the metal core has a cylindrical shape having an axial length of 150-500 mm, and having a diameter of 3 to 60 mm, the crown-shaped rubber layer formed on the metal core having a thickness of 0.5 to 20 mm.

10. A production method as set forth in any one of the preceding Claims wherein the rubber layer has a crown portion having a thickness of 0.001 to 1 mm greater than the thickness of the thinnest part of the rubber layer.
